# EUROPEAN PATENT APPLICATION

(11) **EP 3 680 120 A1**
(43) Date of publication of application: **15.07.2020**
(21) Application number: 20150743.1
(22) Date of filing: 08.01.2020
(51) Int. Cl.: B60K 35/00, B60H 1/00

(54) **TRANSPORT REFRIGERATION MONITORING AND CONTROL**

(30) Priority: 08.01.2019 IN 201911000896
(71) Applicant: Carrier Corporation, Palm Beach Gardens, FL 33418 (US)
(72) Inventor: RENIKUNTLA, Shantan Kumar, Hyderabad, Telangana (IN)
(74) Representative: Dehns

(57) **Abstract**

A system for monitoring a transport refrigeration device 26 of a vehicle 20 that is external to a cab 22 of the vehicle 20 and provides cooling to another portion 24 of the vehicle 20 separate from the cab 22 includes a refrigeration controller 30 associated with the refrigeration device 26 and configured to control operation of the refrigeration device 26. A communication module 42 is associated with the refrigeration controller 30. A display 32 situated in the cab 22 is configured to provide a first visual representation of information regarding the refrigeration device 26 and at least one second visual representation of at least one other type of information. The display 32 obtains the information regarding the refrigeration device 26 from the refrigeration controller 30 through communications with the communication module 42.

## Description

The present invention relates to a system for monitoring a transport refrigeration device of a vehicle having a cab, as well as to a related method.

Refrigerated transportation containers are used for carrying a variety of cargo that requires controlled temperature conditions during shipment. For example, refrigerated trucks typically include a refrigeration device having a refrigerant circuit that provides cooling for the trailer. There are a variety of situations in which it is desirable or necessary for the truck driver to have access to information regarding the conditions in the trailer or the performance of the refrigeration device. It is also useful to allow the driver to adjust or otherwise control the refrigeration device to achieve desired cooling within the trailer. It is best if the driver is able to exercise such control and obtain such information without having to leave the cab.

Various approaches have been proposed to give a driver information regarding or control over the refrigeration device from inside the cab of a truck. Many of those require additional hardware installed in the truck, which introduces additional cost. Another drawback to previous proposals is that they tend to present some inconvenience for the driver based on the location of such hardware within the cab.

Viewed from a first aspect, the invention provides a system for monitoring a transport refrigeration device of a vehicle that is external to a cab of the vehicle and provides cooling to another portion of the vehicle separate from the cab includes a refrigeration controller associated with the refrigeration device and configured to control operation of the refrigeration device. A communication module is associated with the refrigeration controller. A display situated in the cab is configured to provide a first visual representation of information regarding the refrigeration device and at least one second visual representation of at least one other type of information. The display obtains the information regarding the refrigeration device from the refrigeration controller through communications with the communication module.

In an example embodiment having one or more features of the system of the previous paragraph, the display is situated in the cab within a line of sight of a driver of the vehicle when the driver is looking at a road in front of the vehicle.

In an example embodiment having one or more features of the system of any of the previous paragraphs, the display is an infotainment display and the at least one other type of information of the second visual representation includes at least one of navigation information, audible entertainment information, and mobile station information.

In an example embodiment having one or more features of the system of any of the previous paragraphs, the communication module is configured for Wi-Fi communications.

In an example embodiment having one or more features of the system of any of the previous paragraphs, the display is an instrument cluster display; and the at least one other type of information of the second visual representation includes at least one of speedometer information, odometer information, and vehicle engine information.

In an example embodiment having one or more features of the system of any of the previous paragraphs, the communication module is configured for vehicle CAN data communications.

In an example embodiment having one or more features of the system of any of the previous paragraphs, the communication module is configured to communicate with the display using a data transfer rate of at least 500 kilobits per second.

An example embodiment having one or more features of the system of any of the previous paragraphs includes a user interface that allows an individual in the cab to control the refrigeration device and wherein the user interface communicates with the refrigeration controller through the communication module.

An example embodiment having one or more features of the system of any of the previous paragraphs includes a display controller associated with the display and wherein the display controller communicates with the refrigeration controller through the communication module.

In an example embodiment having one or more features of the system of any of the previous paragraphs, the display controller is configured to cause the display to show the first visual representation whenever the refrigeration device is on or cause the display to show the first visual representation when the refrigeration device is on and the cab is occupied by at least one individual.

Viewed from a second aspect, the invention provides a method for at least monitoring a transport refrigeration device that is external to a vehicle cab and provides cooling to another portion of the vehicle separate from the cab. The method includes communicating information from a refrigeration controller associated with the refrigeration device to a display situated in the cab through a communication module associated with the refrigeration controller, displaying a first visual representation of information regarding the refrigeration device, and displaying at least one second visual representation of at least one other type of information.

In an example embodiment having one or more features of the method of the previous paragraph, the display is situated in the cab within a line of sight of a driver of the vehicle when the driver is looking at a road in front of the vehicle.

In an example embodiment having one or more features of the method of any of the previous paragraphs, the display is an infotainment display; and displaying the at least one other type of information comprises displaying at least one of navigation information, audible entertainment information, and mobile station information.

In an example embodiment having one or more features of the method of any of the previous paragraphs, communicating information from the refrigeration controller to the display comprises using Wi-Fi communications.

In an example embodiment having one or more features of the method of any of the previous paragraphs, the display is an instrument cluster display; and displaying the at least one other type of information comprises displaying at least one of speedometer information, odometer information, and vehicle engine information.

In an example embodiment having one or more features of the method of any of the previous paragraphs, communicating information from the refrigeration controller to the display comprises using vehicle CAN data communications.

In an example embodiment having one or more features of the method of any of the previous paragraphs, the communicating comprises using a data transfer rate of at least 500 kilobits per second.

In an example embodiment having one or more features of the method of any of the previous paragraphs, the communication module is configured to communicate using a protocol for at least one of Wi-Fi or vehicle CAN communications.

An example embodiment having one or more features of the method of any of the previous paragraphs includes using a display controller for causing the display to show the first visual representation whenever the refrigeration device is on or causing the display to show the first visual representation when the refrigeration device is on and the cab is occupied by at least one individual.

An example embodiment having one or more features of the method of any of the previous paragraphs includes communicating control information to the refrigeration device control module through the communication module and causing the refrigeration device to operate in response to the control information.

The various features and advantages of at least one disclosed example embodiment will become apparent to those skilled in the art from the following detailed description. The drawings that accompany the detailed description can be briefly described as follows.
Figure 1 schematically illustrates a refrigerated transport vehicle.
Figure 2 schematically illustrates a system for controlling and monitoring a transport vehicle refrigeration device.

The examples described herein provide information to a driver of a vehicle regarding the operation of a refrigeration device of the vehicle through a display situated in a cab of the vehicle that is also used to display other information. This approach allows a vehicle driver to get needed or useful information in a more convenient and efficient manner.

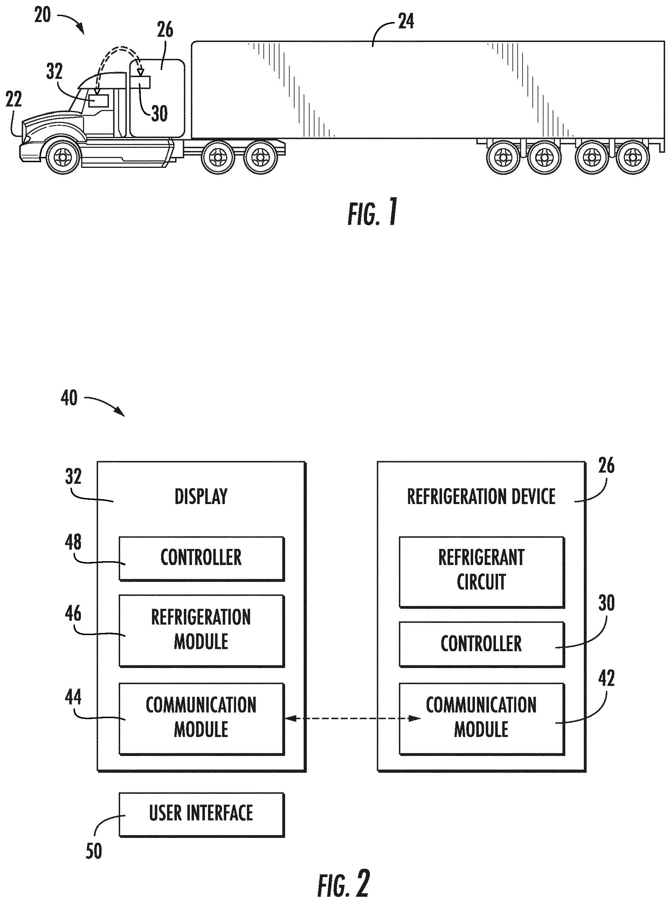

Figure 1 schematically shows a refrigerated transport vehicle 20, which is a truck in this example. The refrigerated transport vehicle 20 includes a cab 22 in which a driver sits to drive the vehicle 20 and a trailer 24 that is separate from the cab 22. A refrigeration device 26 includes known refrigerant circuit components to provide cooling or refrigeration to the trailer 24.

A refrigeration device controller 30 communicates with a display 32 situated in the cab 22 using a data rate for communications that allows the driver of the vehicle 20 to obtain information from the refrigeration device controller 30 in a timely manner. One feature of providing such information on the display 32 is that the display 32 is situated in the cab 22. Optionally, the display 32 is situated where the display 32 will be within a line of sight of the vehicle driver when the driver is looking toward a road in front of the vehicle 20, which makes it easier for the driver to be aware of the refrigeration device information compared to having to divert attention toward another portion of the interior of the cab 22, for example.

As shown in Figure 2, a system 40 for monitoring and controlling the refrigeration device 26 includes a communication module 42 associated with the refrigeration device controller 30. The communication module 42 facilitates communications between the refrigeration device controller 30 and the display 32. In this example, the display 32 includes a display communication module 44. Depending on the type of communications, the type of display 32, or both, the communications between the communication modules 42 and 44 may include Wi-Fi communications or vehicle CAN data communications.

In the illustrated example, a refrigeration module 46 associated with the display 32 interprets information from the refrigeration device controller 30 and a display controller 48 controls the display 32 to provide a first visual representation of the information regarding the refrigeration device 26, such as operation information or an indication of the temperature within the trailer 24. The display controller 48 also controls the display 32 to provide a second visual representation of another type of information that is unrelated to the refrigeration device 26.

Optionally, the display 32 is an instrument cluster display within the cab 22. The instrument cluster display in such an example shows the refrigeration device information on the same display 32 as information related to an engine of the vehicle 20, such as a speedometer reading, an odometer reading, or an amount of fuel available for the engine. The display 32 of the instrument panel provides the first visual representation of the refrigeration device information and the second visual display of other information both within the space allocated for the instrument cluster in the cab 22. In that way, the refrigeration device information is made readily visible for the driver.

When the display 32 is part of the instrument panel of the cab 22, the communication module 42 uses vehicle CAN data communications. In some examples, the vehicle CAN communication data rate is on the order of 500 kilobits per second, which provides adequate bandwidth for providing useful information to the driver in a timely manner.

Alternatively, the display 32 is part of an infotainment system within the cab 22. For example, an infotainment system that is useful for audible entertainment, such as broadcast or satellite radio programming, includes a display that facilitates an individual in the cab 22 selecting a desired station and setting an output volume. That same display is useful to display a navigation map or directions, vehicle feature information, and mobile station (e.g., cell phone) functions. Such an infotainment display includes the communication module 44 for communicating with the communication module 42 so the infotainment display is also used to display information regarding the refrigeration device 26.

When the display 32 is part of an infotainment system, the communication module 42 uses Wi-Fi communications to provide the information necessary for displaying the refrigeration device information. Wi-Fi communications are useful, in part, because the infotainment display does not have adequate CAN bandwidth to handle the data needed for a timely and useful display of the first visual representation of the refrigeration device information.

The illustrated example system 40 is also useful for controlling operation of the refrigeration device 26. A user interface 50 includes one or more control inputs that allow an individual in the cab 22 to adjust or otherwise control operation of the refrigeration device. Although schematically shown separate from the display 32 in Figure 2, the display 32 may comprise a touch screen and the user interface is realized on or through the display 32. Other user interfaces include switches or buttons that can be manipulated to indicate a desired adjustment or setting, which are shown on the display 32. The commands from the user interface 50 are received by the communication module 42 and the refrigeration device controller 30 responsively controls the refrigeration device 26.

Optionally the display 32 provides at least the first visual representation of refrigeration device information whenever the refrigeration device 26 is on. There may be an occupant sensor in the cab 22, wherein the display 32 is only active when someone is present in the cab 22.

The above examples may provide improvements in controlling or monitoring a transport refrigeration device 26 that increases convenience for a driver of a vehicle and enhances ensuring desired operation of the refrigeration device 26.

The preceding description is exemplary rather than limiting in nature. Variations and modifications to the disclosed examples may become apparent to those skilled in the art that do not necessarily depart from the scope of this invention as defined by the claims. The scope of legal protection given to this invention can only be determined by studying the following claims.

## Claims

1. A system for monitoring a transport refrigeration device of a vehicle having a cab, wherein the refrigeration device is external to the cab and provides cooling to another portion of the vehicle separate from the cab, the system comprising:
a refrigeration controller associated with the refrigeration device and configured to control operation of the refrigeration device;
a communication module associated with the refrigeration controller; and
a display situated in the cab, the display being configured to provide a first visual representation of information regarding the refrigeration device and at least one second visual representation of at least one other type of information, the display obtaining the information regarding the refrigeration device from the refrigeration controller through communications with the communication module.

2. The system of claim 1, wherein the display is situated in the cab within a line of sight of a driver of the vehicle when the driver is looking at a road in front of the vehicle.

3. The system of claim 1 or 2, wherein
the display is an infotainment display; and
the at least one other type of information of the second visual representation includes at least one of navigation information, audible entertainment information, and mobile station information.

4. The system of claim 1, 2 or 3, wherein the communication module is configured for Wi-Fi communications.

5. The system of claim 1 or 2, wherein
the display is an instrument cluster display; and
the at least one other type of information of the second visual representation includes at least one of speedometer information, odometer information, and vehicle engine information.

6. The system of any preceding claim, wherein the communication module is configured for vehicle CAN data communications.

7. The system of any preceding claim, wherein the communication module is configured to communicate with the display using a data transfer rate of at least 500 kilobits per second.

8. The system of any preceding claim, comprising a user interface that allows an individual in the cab to control the refrigeration device and wherein the user interface communicates with the refrigeration controller through the communication module.

9. The system of any preceding claim, comprising a display controller associated with the display and wherein the display controller communicates with the refrigeration controller through the communication module.

10. The system of claim 9, wherein the display controller is configured to
cause the display to show the first visual representation whenever the refrigeration device is on; or
cause the display to show the first visual representation when the refrigeration device is on and the cab is occupied by at least one individual.

11. A method of monitoring a transport refrigeration device of a vehicle having a cab, wherein the refrigeration device is external to the cab and provides cooling to another portion of the vehicle separate from the cab, the method comprising:
communicating information from a refrigeration controller associated with the refrigeration device to a display situated in the cab through a communication module associated with the refrigeration controller;
displaying a first visual representation of information regarding the refrigeration device; and
displaying at least one second visual representation of at least one other type of information.

12. The method of claim 11, comprising using a system as defined in any of claims 1 to 10.

13. The method of claim 11 or 12, wherein communicating information from the refrigeration controller to the display comprises using vehicle CAN data communications.

14. The method of claim 11, 12 or 13, wherein the communicating comprises using a data transfer rate of at least 500 kilobits per second.

15. The method of any of claims 11 to 14, comprising using a display controller for:
causing the display to show the first visual representation whenever the refrigeration device is on; or
causing the display to show the first visual representation when the refrigeration device is on and the cab is occupied by at least one individual.
